# EUROPÄISCHE PATENTSCHRIFT

(11) **EP 1 163 076 B1**
(45) Veröffentlichungstag und Bekanntmachung des Hinweises auf die Patenterteilung: **27.11.2002**
(21) Anmeldenummer: 00912391.0
(22) Anmeldetag: 24.02.2000
(51) Int. Cl.: B23C 5/10

(54) **SCHNEIDPLATTE UND KUGELKOPFFRÄSWERKZEUG**
CUTTING PLATE AND SPHERICAL MILLING CUTTER
MATRICE DE DECOUPAGE ET OUTIL DE FRAISAGE A TETE SPHERIQUE

(30) Priorität: 23.03.1999 DE 19913088
(43) Veröffentlichungstag der Anmeldung: 19.12.2001
(73) Patentinhaber: Widia GmbH, 45145 Essen (DE)
(72) Erfinder: HINTZE, Wolfgang, D-21077 Hamburg (DE); KNICKENBERG, Bernd, D-45355 Essen (DE)
(74) Vertreter: Vomberg, Friedhelm, Dipl.-Phys.
(86) Internationale Anmeldenummer: DE0000564
(87) Internationale Veröffentlichungsnummer: WO00056492

(56) Entgegenhaltungen:
- EP-A- 0 008 972
- WO-A-94/23873
- DE-A- 4 310 131
- DE-A- 19 721 283
- DE-A- 19 855 103
- GB-A- 2 047 589
- US-A- 3 213 716

## Beschreibung

Die Erfindung betrifft eine Schneidplatte für einen Kugelkopffräser (Fingerfräswerkzeug), insbesondere zum Formenfräsen, mit zwei einander gegenüberliegenden ebenen Anlageflächen, zwei unter einem positiven Freiwinkel geneigten und sich jeweils über einen Winkel von mindestens 90° erstreckenden bogenförmigen Freiflächen, zwei drehsymmetrisch angeordneten teilkreisförmigen, im wesentlichen diametral gegenüberliegenden Schneidkanten und einer Bohrung zur Aufnahme einer Spannschraube.

Die Erfindung betrifft ferner einen Kugelkopffräser mit einem Werkzeughalter, der eine Ausnehmung zur Aufnahme eines Schneideinsatzes der vorgenannten Art aufweist, die mit einer Spannschraube fixiert wird.

Bei der Fertigung von Hohlformwerkzeugen, die zum Teil komplexe Geometrien aufweisen, werden effizient arbeitende Schneidwerkzeuge benötigt, die vor allen Dingen notwendige Zerspanungsarbeiten in kurzer Zeit mit hoher Genauigkeit durchführen lassen. Formen, insbesondere als Schmiedegesenke, bestehen aus einem harten Werkstoffmaterial, das nur mit einem entsprechend geometrisch präzisem Werkzeug zur Vermeidung von manuellen Nacharbeiten hergestellt werden kann. Die hierzu verwendeten, mehrdimensional bewegbaren Fingerfräser müssen geeignet sein, sowohl in axialer (Vorschub-)Richtung als auch senkrecht dazu zu schneiden. Dies setzt wegen der geforderten Fertigungsgenauigkeit teilkreisförmige Schneiden voraus, deren Abweichung von der Kreisform möglichst gering sein soll. Die Werkzeugschneiden werden beim sogenannten Hochgeschwindigkeitsfräsen erheblichen Belastungen unterworfen. Typische Schnittgeschwindigkeiten für Werkstoffe, die für Hohlformwerkzeuge verwendet werden, sind für Aluminium v_{c} = 2000 bis 8000 m/min, für Gußwerkstoffe v_{c} = 800 bis 2000 m/min und für legierte Stähle v_{c} = 300 bis 1200 m/min. Die Schneidkante des verwendeten Werkzeuges soll möglichst zäh sein, um dem bei der Zerspanung entstehenden Druck im Zentrum standhalten zu können.

Ein Schneideinsatz der eingangs genannten Art ist aus der EP 0 008 972 bekannt.

Ein Fräswerkzeug mit einem Werkzeughalter, der in einer entsprechend geformten Ausnehmung einen wechselbaren Schneideinsatz aufnimmt, wird ferner in der DE 30 30 442 A1 beschrieben. Dort wird u.a. zur Erzielung einer optimalen Rundlaufgenauigkeit der bogenförmigen Schneidkanten der Schneidplatte sowie einer hohen Austauschpräzision vorgeschlagen, am Aufnahmeschaft des Werkzeughalters ein Klemmorgan vorzusehen, das die Schneidplatte erst dann an der Anlagefläche festklemmt, nachdem sie zuvor unter Vorspannung an ein Gegenlager angedrückt worden ist. Der Aufnahmeschaft weist am Vorderende eine durch diesen quer hindurchgeführte Nut auf, deren eine Nutwand eine Anlagefläche bildet und in die die verwendete Schneidplatte paßgenau einsteckbar ist. Das Gegenlager wird durch den Nutgrund gebildet. In der anderen Nutwand befindet sich eine zur Gewindebohrung fluchtende Schraubenbohrung, die zur versenkten Anordnung eines Kopfes einer Befestigungsschraube angesenkt ist. Das Gegenlager des Werkzeughalters soll ein in Richtung der Längsachse des Aufnahmeschaftes verstellbares Abstützglied aufweisen, das in eine entsprechende Ausnehmung am Umfang der Schneidplatte formschlüssig eingreift. Die Schneidplatte selbst besitzt zwei Schneiden, die zur Längsachse des Fräswerkzeuges gesehen einander symmetrisch zugeordnet sind. Zur Bildung eines Freiwinkels sollen die beiden Schneiden am Plattenumfang hinterschliffen sein.

In der WO 94/23873 wird eine für einen Kugelkopfschlichtfräser bestimmte Schneidplatte vorgeschlagen, bei der mindestens zwei symmetrisch angeordnete, als Träger für Schneidkanten bildende Schneidschichten dienende Einsätze vorgesehen sind, die aufeinander gegenüberliegenden Anlageflächen bildenden Seiten des Schneidplattengrundkörpers angeordnet sind. Diese Einsätze können z.B. ebenso wie der Schneideinsatz-Grundkörper aus Hartmetall bestehen oder aus einem anderen Material, z.B. einer polykristallinen Diamantschicht, einem kubischen Bornitrid oder anderen Stoffen, die ggf. noch mit verschleißmindernden Stoffen, insbesondere Aluminiumoxid ganz oder teilweise beschichtet sind. Die kreissegmentförmigen Einsätze werden am Schneidplattengrundkörper z.B. durch Löten befestigt. Der Schneidplattengrundkörper weist eine sich über 180° erstreckende, im Querschnitt kreisförmige oder annähernd kreisförmige Kontur auf, an die sich symmetrisch konvergierende Ränder und schließlich ein diese verbindender Basisrand anschließen, wodurch eine prismatische Anlagefläche gebildet wird, die im Spannzustand formschlüssig an einer korrespondierend ausgebildeten prismatischen Anlagefläche des Werkzeughalter-Schneideinsatz-Sitzes anliegt. Als Spannmittel wird eine Spannschraube verwendet, welche eine Bohrung des Schneideinsatzes durchgreift.

Schließlich wird in der DE 197 21 283 A1 ein Schneideinsatz der eingangs genannten Art beschrieben, dessen im wesentlichen diametral gegenüberliegende Schneidkanten zusammen mit den hieran anschließenden Spanflächen folgende Lagen einnehmen können: In einer ersten Variante verläuft eine der Spanflächen axial, während die andere geringfügig untermittig angeordnet ist. Alternativ können beide Spanflächen axial angeordnet sein, wobei ggf. das vordere Ende der einen Spanfläche mit einer Abschrägung ausgestattet ist, deren Ende untermittig liegt, wodurch eine höhere Robustheit des Schneideinsatzes erzielt werden soll. Weiterhin können beide Spanflächen übermittig angeordnet sein, wobei zwischen ihren beiden Enden in der Nachbarschaft der Achse zwei kleine Abschrägungen vorgesehen sein können, die zwar zu gewissen Intoleranzen führen, welche bei Grobbearbeitungen (Schruppbearbeitung) tolerierbar sind. Die Abschrägungen können auch am Ende von übermittigen Radien verlaufen.

Weiterhin sind Werkzeuge bekannt, bei denen die Umfangsschneiden auf dem Niveau der Anlageflächen liegen, d.h. in Abhängigkeit der Schneidplattengesamtdicke deutlich übermittig angeordnet sind. Hieraus resultiert ein umfangsseitig effektiv stark negativer Spanwinkel, der zu einer radial starken Abdrängung des Werkzeuges oder zu Schwingungen im Zerspanprozess führen kann. Weiterhin stellt die zwischen geneigter Zentrums- und ebener Peripherieschneide abknickende Schneide bei diesen Werkzeugen eine Schwachstelle dar, die hinsichtlich Schneidenausbrüchen gefährdet ist.

Es ist Aufgabe der vorliegenden Erfindung, einen Schneideinsatz der eingangs genannten Art sowie einen Kugelkopffräser zum Präzisionsformfräsen zu schaffen, bei dem eine hohe Schneidkantenstabilität gewährleistet ist, die je nach den Einsatzbedingungen (Grob-Bearbeitung (Schruppen) oder Fein-Bearbeitung (Schlichten)) die beim Fräsen mit schlanken Werkzeugen auftretende radiale Abdrängung sowie etwaige Rundlaufabweichungen in minimalen Grenzen hält.

Diese Aufgabe wird durch die Schneidplatte gemäß Anspruch 1 gelöst, bei der erfindungsgemäß zumindest über einen Teilbereich der Schneidkante eine Fase angeordnet ist, die gegenüber den Anlageflächen geneigt ist. Diese Fase kann sich alternativ entlang der gesamten Schneidkante erstrecken oder bei Schlichtfräsern nur in den dem Zentrum benachbarten Bereichen oder schließlich in peripheren Außenbereichen. Im Gegensatz zu Schneideinsätzen mit einem umfangsseitig stark negativ ausgebildeten effektiven Spanwinkel lassen sich große radiale Abdrängkräfte hierdurch vermeiden. Die Schneidkante wird durch die erfindungsgemäße Ausbildung durch die höhere Werkzeugzähigkeit stabilisiert. Ausbrüche, insbesondere im Zentrumsbereich der Schneidkanten, werden wirksam vermieden.

Weiterbildungen der Erfindung sind in den Unteransprüchen beschrieben.

So wird vorzugsweise die Fase in bezug auf die ebenen Anlageflächen negativ geneigt angeordnet, insbesondere unter einem Winkel zwischen 8° und 30°, weiterhin vorzugsweise zwischen 10° und 20° bzw. zwischen 13° und 15°. In einer alternativen Ausführungsform beträgt der Fasenwinkel 30° bis 60°, vorzugsweise 45°.

In einer weiteren Ausführungsform erstreckt sich die unter einem Fasenwinkel < 30° liegende Fase nur über einen Teilbereich der Schneide und läuft an ihren Enden kontinuierlich zu 0 mm aus und besitzt eine maximale Breite von 0,05 mm bis 0,2 mm, vorzugsweise von 0,08 mm bis 0,15 mm. Angesprochen sind hier insbesondere Ausführungsformen, bei denen die Fase zum axialen Zentrum hin kontinuierlich (auf 0 mm) ausläuft. Die vorliegende Erfindung umfaßt alle Ausführungsformen, bei der ausgehend etwa vom Zentrum, d.h. der Längsachse des Fräsers, die Fase kontinuierlich bis zu ihrer maximalen Breite zunimmt und sich anschließend zu peripheren Bereichen hin wieder verjüngt, wobei die Fase sich über einen Winkelbereich der Schneide erstreckt, der vorzugsweise zwischen 3° und 100° liegt. Alternativ werden bei Fasen unter einem größeren Fasenwinkel zwischen 30° und 60° Fasenbreiten von 0,01 mm bis 0,08 mm, vorzugsweise 0,02 mm bis 0,05 mm gewählt. Hierbei ergibt sich vorteilhafterweise eine kontrollierte Schneidenstabilisierung in Schneidenbereichen, die für Schneidenverrundungsverfahren, wie z.B. das Bürsten, schlecht zugänglich sind oder bei hoch harten Schneidstoffen, wie z.B. CBN oder Keramik, oder wenn gänzlich auf eine Schneidenverrundung verzichtet wird. Je nach Anwendungsfall erstreckt sich die Fase über Winkelbereiche der Schneide von 3° bis 8°, 8° bis 20°, 20° bis 45° oder 45° bis 100°.

Die vorliegende Erfindung umfaßt zum einen sogenannte Schlicht-Einsätze, bei denen die Schneidkanten jeweils untermittig angeordnet sind, wobei der Abstand der untermittigen Ebenen der Schneiden 0,015 mm bis 0,5 mm, vorzugsweise 0,02 mm bis 0,2 mm, beträgt. Im Übergangsbereich, d.h. von der Peripherie zum Zentrum hin, steigen die Schneidkanten jeweils an.

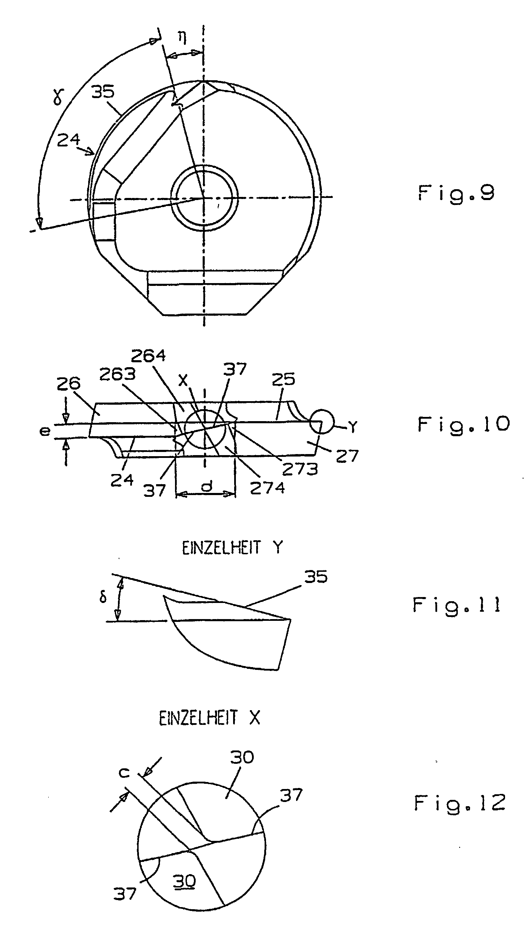

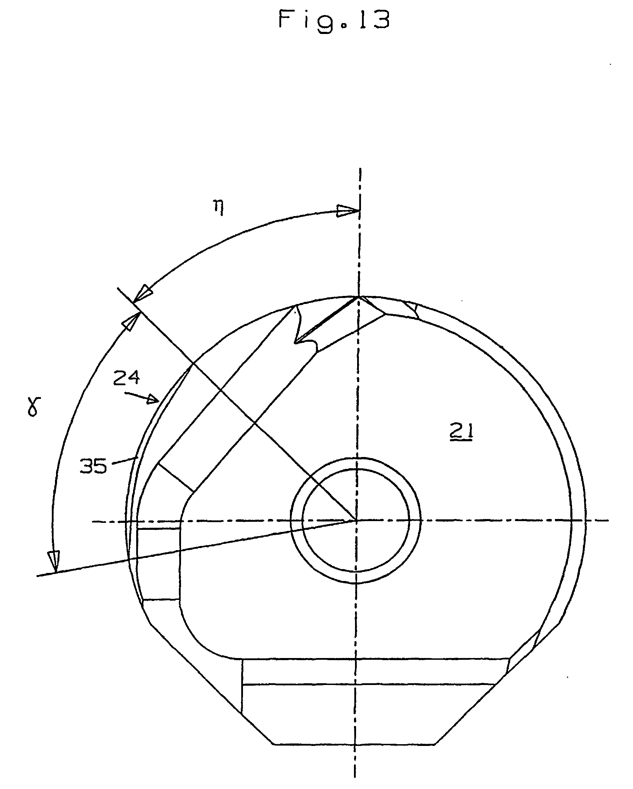

Alternativ kann bei sogenannten Schrupp-Einsätzen eine Ausführungsform gewählt werden, bei der die Schneidkanten jeweils von der Peripherie zum Zentrum hin in einen Bereich abfallen, der mindestens 0,4 mm, vorzugsweise mindestens 0,6 mm, beträgt. Außerhalb dieses Zentrumsbereiches, der durch die abfallenden Schneiden bereits stabilisiert ist, ist dann, vorzugsweise über einen Winkelbereich der Schneide (γ) zwischen 30° und 100°, die erwähnte Fase angeordnet. Diese Ausbildung mit einer die jeweiligen peripher angeordneten Schneidkanten verbindenden schräg verlaufenden Schneide im Zentrumsbereich läßt sich fertigungstechnisch dadurch realisieren, daß die Spanfläche auf den gegenüberliegenden Seiten im Zentrum jeweils "einen schrägen Anschliff" erhält, der in Form einer Ausspitzung ausgebildet ist. Der Fasenanschliff wird im peripheren Bereich, d.h. bezogen auf die axialen Richtung in einem Winkelbereich (γ) von insbesondere 45° bis 100° außen angebracht. Der Startwinkel η, der die Lage des gefasten Schneidbereiches definiert, ergibt sich entweder aus der Grenze zwischen Zentrums- und Peripherieschneide (vgl. Fig. 9) oder liegt in dem Bereich von 5° bis 60°, vorzugsweise 12° bis 35°, vgl. Fig. 13. Im erstgenannten Fall wird vorteilhafterweise der Knick zwischen Zentrums- und Peripherieschneide entschärft. Durch diese Ausgestaltung stehen die Schneidkanten übermittig, wobei die peripher liegenden Schneidkanten jeweils in parallelen Ebenen zueinander liegen. Hierdurch ergibt sich eine höhere Stabilität und Bruchsicherheit entlang der gesamten Schneide, da die resultierende Schnittkraft näherungsweise in die Auflagefläche gerichtet ist. Dies wirkt sich bei rauhen Einsatzbedingungen und bei kurz ausspanenden Werkzeugen, beim 3-achsigen Fräsen mit angestelltem Fräser sowie beim 5-achsigen Fräsen günstig aus.

Nach einer weiteren Ausgestaltung und im Hinblick auf eine hohe Rundlaufgenauigkeit besitzt der Schneideinsatz im hinteren Bereich prismatische Anlageflächen, welche eine stets reproduzierbar exakte Positionierung des Schneideinsatzes im Werkzeughalter gewährleisten.

Die Freiflächen des Schneideinsatzes sind unter einem Freiwinkel geneigt, der zwischen 0° und 30°, vorzugsweise 10° und 20° liegt. Zur Stabilisierung der Schneidkante kann vorgesehen sein, daß die Freifläche konvex ausgebildet oder abgewinkelt ist, wobei vorzugsweise die an die jeweilige Schneidkante angrenzende Freifläche unter einem Freiwinkel zwischen 0° und 15° geneigt ist, wodurch ein entsprechend großer Keilwinkel geschaffen wird, und die an die Anlagefläche angrenzende Freifläche unter einem größeren Freiwinkel geneigt ist, der vorzugsweise zwischen 7° und 35° liegt. Die Breite der an die Schneidkante angrenzenden Freifläche liegt zwischen 5 % und 30 %, vorzugsweise 7 % und 15 % des Abstandes der ebenen Anlageflächen (Höhe des Schneideinsatzes). Die Freiflächenbereiche, die an die weiter außen liegenden Schneidkantenbereiche angrenzen, können auch einen kleineren Freiwinkel als innen (im Zentrum) aufweisen.

Die vorliegende Erfindung umfaßt somit einerseits einen Schneideinsatz für einen Kugelfräser, bei dem die diametral gegenüberliegenden Schneiden nicht in einer Ebene liegen. Die Umfangsschneiden, d.h., die weiter peripher außenliegenden Schneidkantenbereiche jeder Schneide liegen in zueinander parallelen Ebenen. Im Zentrumsbereich laufen die beiden Schneiden bzw. die Zentrumsschneidenbereiche in Richtung der Rotationsachse des Werkzeuges auf einander zu.

Gegenüberliegende Freiflächen sind vorzugsweise unterhalb der Umfangsschneidenbereiche konisch oder kegelig ausgebildet, während sich die Freifläche unterhalb der zur Rotationsachse aufeinander zulaufenden Zentrumsschneidenbereiche gegenüber den konischen Freiflächenbereichen vorwölben, so daß alle Schneidenbereiche näherungsweise auf einer gemeinsamen Hüllkugel liegen, wobei optimale runde Schnitte erzeugt werden können.

Die Rauheiten Rₐ und/oder R_{z} auf der Fasenfläche können niedriger als auf der Spanfläche und/oder der Freifläche sein, vorzugsweise in einem Verhältnis von 30 bis 80 %. Hierdurch ergibt sich eine geringere Schneidenschartigkeit mit dem Vorteil einer verminderten Neigung zu Mikrobröckelungen der Schneide, einer längeren Standzeit und einer höheren Oberflächengüte des Werkstückes.

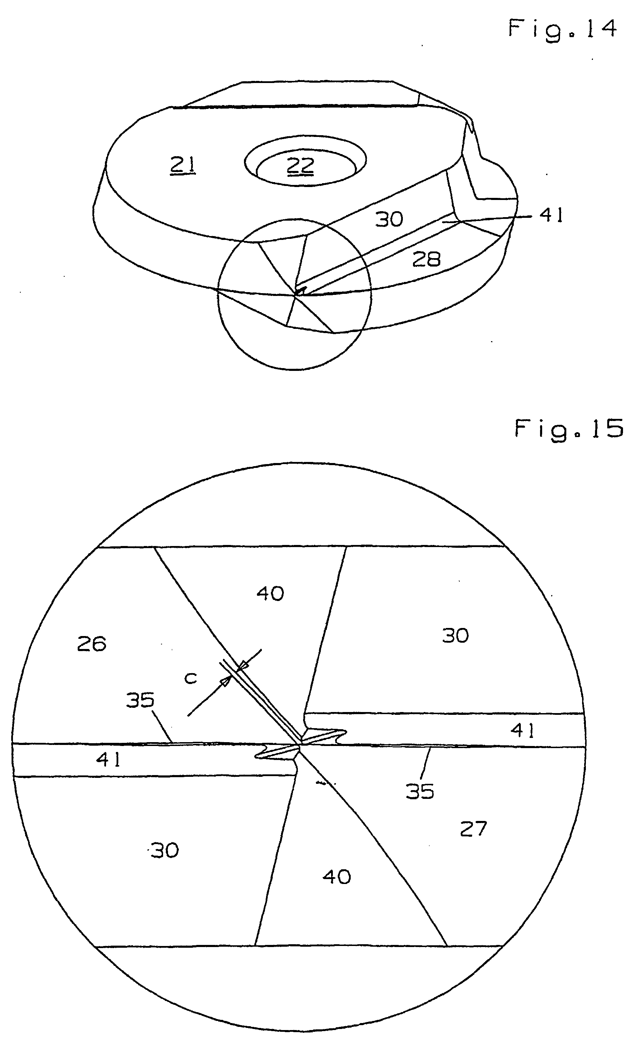

In einer alternativen Ausführungsform kann sich bei untermittiger Anordnung der gefasten Schneiden die Fase in Zentrumsnähe bis in den Übergangsbereich zwischen der Spanfläche und der Spanformstufe erstrecken und eine Ausspitzung bilden (Fig. 14-15). Hierdurch wird einerseits eine verbesserte Schneidfähigkeit im Zentrum erreicht, da sich der Abstand (c) der Zentrumsschneiden zueinander verringert (Fig. 15). Andererseits wird eine stärkere Ausrundung zwischen der Spanfläche und der Spanformstufe mit einem größeren Verrundungsradius möglich, der zu einer geringeren Kerbwirkung und infolge dessen zu einer höheren Bruchsicherheit der Schneidplatte führt.

Fasen, die sich ausgehend vom Zentrum über einen Winkelbereich der Schneide von maximal 45° erstrecken, besitzen den Vorteil, daß die Stabilität und die Bruchsicherheit nahe dem Schneidenzentrum erhöht wird, in dem die Schnittgeschwindigkeit 0 beträgt. Dies wirkt sich insbesondere beim 3-achsigen Fräsen mit einer Fräseranstellung von 0°, bei der Bearbeitung hochfester bzw. harter Stahl und Gußwerkstoffe oder bei axial eintauchenden ("bohrenden") Vorschubbewegungen des Fräsers positiv aus.

Sofern im Zentrumsschneidenbereich mit Blick auf die Tauchfähigkeit des Werkzeuges ein höherer Freiwinkel als an den Umfangsschneiden gewählt wird, kann durch Schneidenfasen in diesem Bereich dennoch eine gleichmäßige Größe und Stabilität des Schneidkeiles entlang der gesamten Schneide erzielt werden. Andererseits ergeben sich bei umfangsseitigem, etwa radialen Schneideneingriff, d.h. im ungefasten Schneidenbereich aufgrund des Spanwinkels von etwa 0° relativ niedrige Radialkräfte, was in Anbetracht der radial hohen Nachgiebigkeit der Werkzeuge (Fingerfräser) besonders bedeutsam ist. Im Ergebnis kann damit eine Werkzeugdurchbiegung und Ratterneigung minimiert werden sowie gleichermaßen die Werkstückmaßhaltigkeit und Oberflächengüte an steilen Konturen, vor allen Dingen beim Einsatz lang auskragender Werkzeuge verbessert werden.

Eine noch weitergehende Reduktion der radialen Abdrängkräfte wird dadurch erreicht, daß die Spanflächen im Anschluß an die Schneiden in den gefasten und/oder ungefasten Schneidenbereichen mit einer Spanformmulde ausgebildet werden. Der Spanwinkel der Spanformmulde (ϕ) liegt zwischen 5° und 30°, vorzugsweise zwischen 10° und 20°. Die Spanformmulde kann eingeschliffen oder direkt geformt sein, z.B. durch Pressen und Sintern. Weiterhin läuft die Spanformmulde in einem durch den Winkel (λ) von 5° bis 20° definierten Abstand zum Zentrum aus.

Sämtliche beschriebenen Schneideinsätze können aus beschichtetem Hartmetall oder einem beschichteten Cermet bestehen, wobei die Beschichtung mittels eines PVD- oder eines CVD- und/oder eines Mitteltemperatur-CVD-Verfahrens aufgetragen worden ist. Die Schneidplatten können insbesondere mit einer Schicht aus einem kubischen Bornitrid oder einem polykristallinem Diamant überzogen sein. Vorteilhafterweise ergibt sich hierdurch eine breitere Anwendung hochverschleißfester beschichteter Schneidstoffe in Verbindung mit den gefasten Schneiden, womit eine höhere Prozeßsicherheit und längere Standzeiten möglich werden, da gefaste Schneiden der bei beschichteten Schneideinsätzen unvermeidlichen Zähigkeitseinbußen des Substratmaterials und der Schneidenbruchgefahr entgegenwirken.

Alternativ kann der Schneideinsatz selbstverständlich aus hochverschleißfestem Hartmetall, einem Cermet, einer Oxidkeramik oder einer Mischkeramik, aus den genannten Keramiken mit oder ohne Beschichtung bestehen. Ggf. können diese Schneideinsätze auch aus einer Nitridkeramik oder einer beschichteten Nitridkeramik bestehen, wobei ggf. auch Ausführungsformen wie in der WO 94/23873 grundsätzlich beschrieben, realisierbar sind, allerdings mit der Maßgabe einer erfindungsgemäßen Fase.

Die vorliegende Erfindung betrifft auch einen Kugelkopffräser mit einem Werkzeughalter, der eine Ausnehmung zur Aufnahme des vorbeschriebenen Schneideinsatzes aufweist, der mit einer Spannschraube fixiert wird. Der Plattensitz des Werkzeughalters besitzt korrespondierende Anlageflächen, die mit den prismatischen Anlageflächen des Schneideinsatzes im hinteren Bereich eine formschlüssige Anlage im Spannzustand bilden.

Weitere Ausgestaltungen der Erfindung werden im folgenden anhand der Zeichnungen beschrieben. Es zeigen
- Fig. 1: eine Draufsicht auf einen erfindungsgemäßen Schneideinsatz mit Blick auf die teilkreisförmigen Schneiden in Richtung der Werkzeugrotationsachse
- Fig. 2 bis 4: jeweils Draufsichten auf Schneideinsätze in Richtung der Anlageflächen, wobei die Länge der Fase jeweils variiert,
- Fig. 5: eine vergrößerte Teilansicht des Zentrumsbereiches eines Schneideinsatzes nach Fig. 3,
- Fig. 6: eine Draufsicht auf das Zentrum eines Schneideinsatzes nach Fig. 17,
- Fig. 7: eine Detailansicht der Schneidkante mit Fase,
- Fig. 8: eine Draufsicht auf einen Schneideinsatz mit abgewinkelten Freiflächen,
- Fig. 9: eine Draufsicht auf einen weiteren Schneideinsatz in Richtung der Auflagefläche,
- Fig. 10: eine Draufsicht auf den Schneideinsatz nach Fig. 9 in Richtung der Schneidkante,
- Fig. 11: eine Detailansicht der Spanfläche im Bereich der gefasten Schneidkante und
- Fig. 12: eine Draufsicht auf das Zentrum des Schneideinsatzes nach Fig. 10.
- Fig. 13: eine alternative Ausführungsform zu Fig. 9-12 hinsichtlich Startwinkel (η) und Winkelbereich (γ) in einer Draufsicht auf den Schneideinsatz in Richtung der Auflagefläche,
- Fig. 14: in perspektivischer Ansicht eine alternative Ausführungsform eines Schneideinsatzes, mit einer untermittigen Anordnung der gefasten Schneidenbereiche, die sich bis in die Ausrundung zwischen Spanfläche und Spanformstufe erstrecken,
- Fig. 15: eine detaillierte Draufsicht auf das Zentrum des Schneideinsatzes nach Fig. 14,
- Fig. 16, 18: eine Draufsicht von alternativen Ausführungen zu Fig. 2
- Fig. 17: eine Draufsicht auf das Zentrum für Schneideinsätze gemäß Fig. 16 oder 18,
- Fig. 19: eine perspektivische Ansicht eines Schneideinsatzes nach Fig. 16,
- Fig. 20: eine Detailansicht von Fig. 19,
- Fig. 21 und 22: einen Schneideinsatz mit Spanformmulde.

Die in den Figuren dargestellten Schneideinsätze sind im wesentlichen plattenförmig ausgebildet und besitzen zwei Auflageflächen 20, 21 sowie ein mittleres Befestigungsloch 22 zur Aufnahme einer Spannschraube. Jeweils beidseitig einer Längsachse 23, die auch die Rotationsachse des Kopierfräsers mit dem eingespannten Schneideinsatz ist, sind Schneiden 24 und 25 angeordnet, die sich jeweils über einen Winkelbereich von ca. 100°, gemessen von der Längsachse 23 aus, erstrecken. Die Schneidkanten werden durch Freiflächen 26, 27 einerseits und Spanflächenabschnitte η 28, 29 andererseits gebildet. Jeweils von der Spanflächenebene 28, 29 ausgehend, erstreckt sich eine im vorliegenden Fall abgewinkelte Flanke 30, die eine Verbindungsfläche zu der oberen bzw. unteren Auflagefläche bildet. Der Schneideinsatz besitzt im hinteren Bereich prismatisch angeordnete Anlageflächen 31 und 32, die in einer formschlüssigen Anlage an korrespondierend ausgebildeten Anlageflächen des Plattensitzes eines Werkzeughalters im Spannzustand anliegen. Im das Zentrum (siehe Fig. 5) umgebenden Bereich geht die Anstiegsflanke in eine Ausspitzung 34 über, die - je nach unter- oder übermittiger Schneidenanordnung - durch abschließendes Schleifen gefertigt wird.

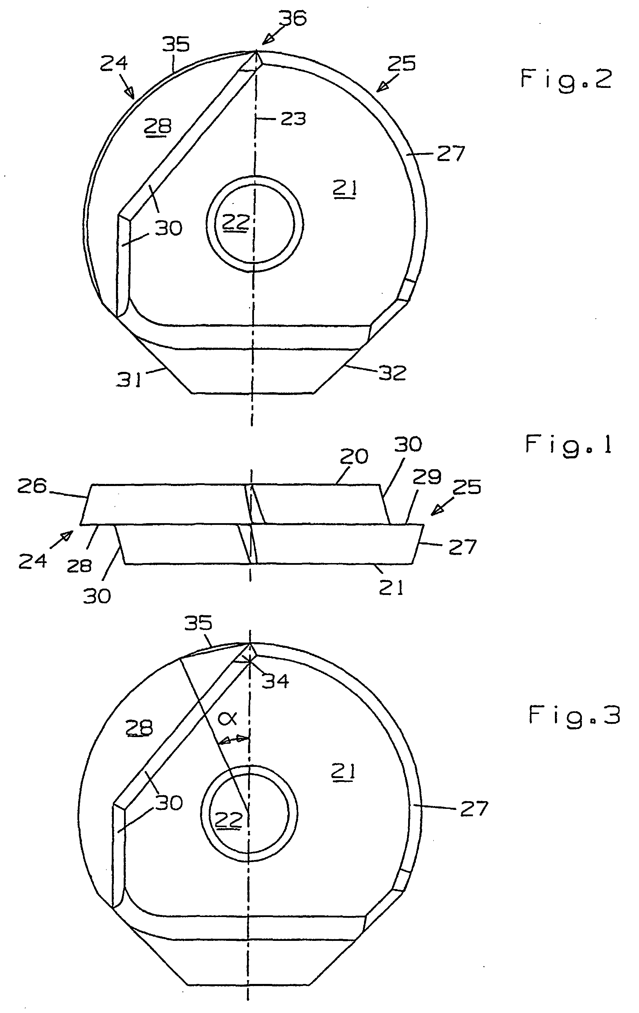

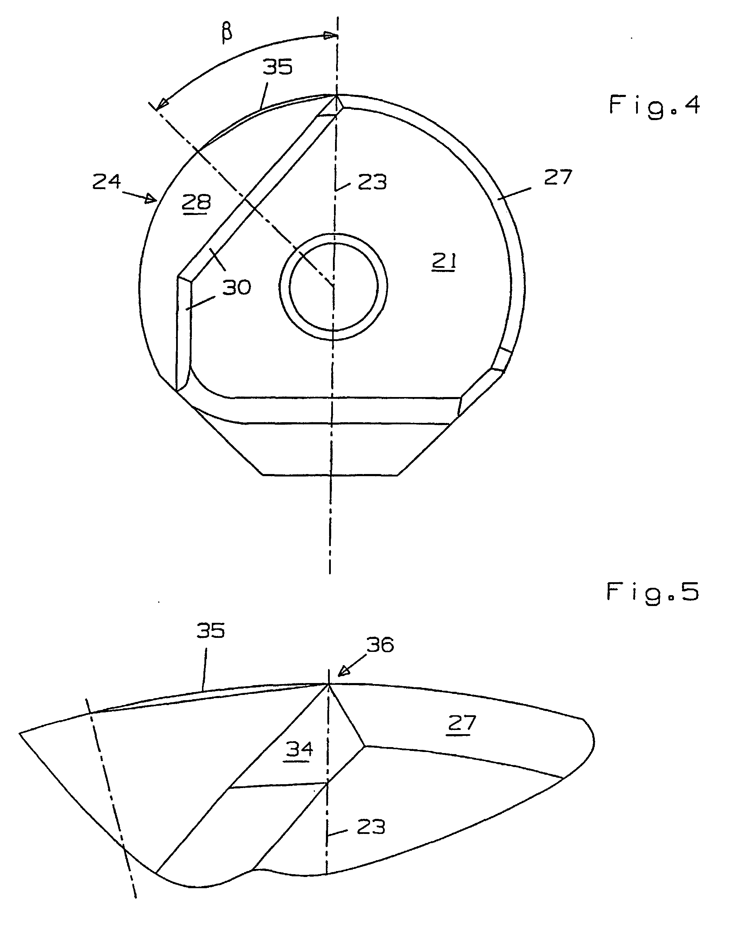

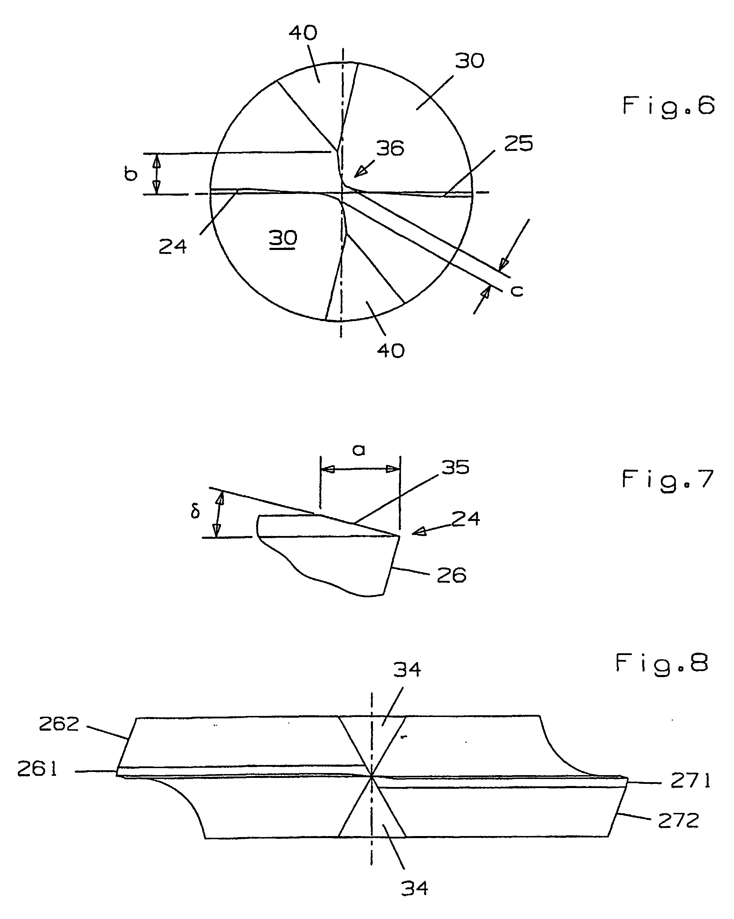

Gegenstand der vorliegenden Erfindung ist eine Fase, die sich als Fase 35 nur über einen Winkel α von ca. 20° (siehe Fig. 3) oder β (ca. 45°, siehe Fig. 4) oder über die gesamte Schneidkante (siehe Fig. 2), d.h. über ca. 100°, erstreckt. Die die Schneidkante stabilisierende Fase verjüngt sich an ihren beiden Enden, d.h. insbesondere zum Zentrum 36 hin, zu einer Breite 0 und besitzt (siehe Fig. 7) eine maximale Breite a, die im Bereich von 0,08 mm bis 0,15 mm liegt. Ausgehend von dem Zentrum 36, in dem keine Fase vorhanden ist, vergrößert sich zu peripheren Bereichen hin die Fase 35 bis auf den genannten maximalen Breitenwert a, der ggf. über ein längeres Winkelmaß konstant sein kann (siehe Fig. 2, 4) und wonach die Fase 35 im weiter außen liegenden peripheren Bereich wieder auf 0 ausläuft. Der Fasenwinkel δ liegt bei 15°.

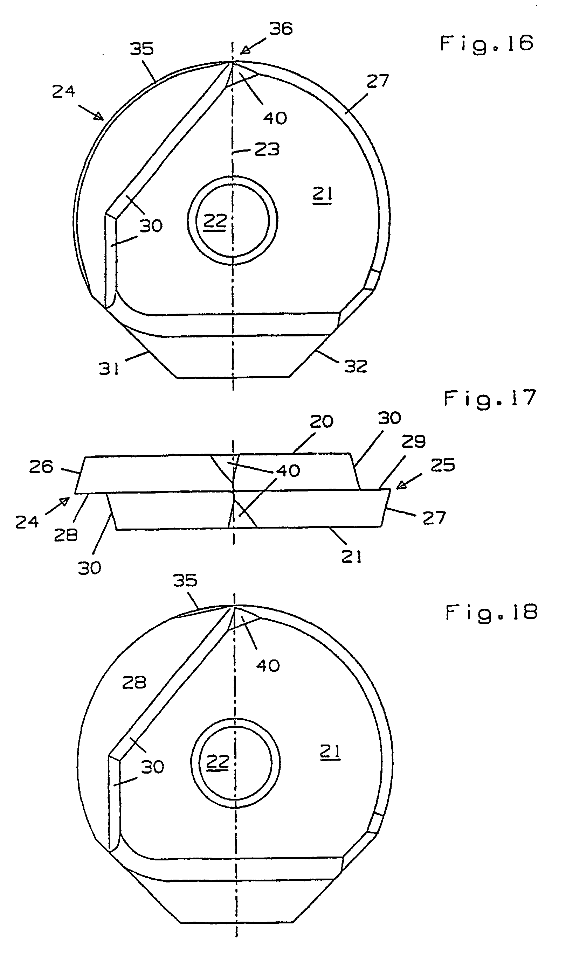

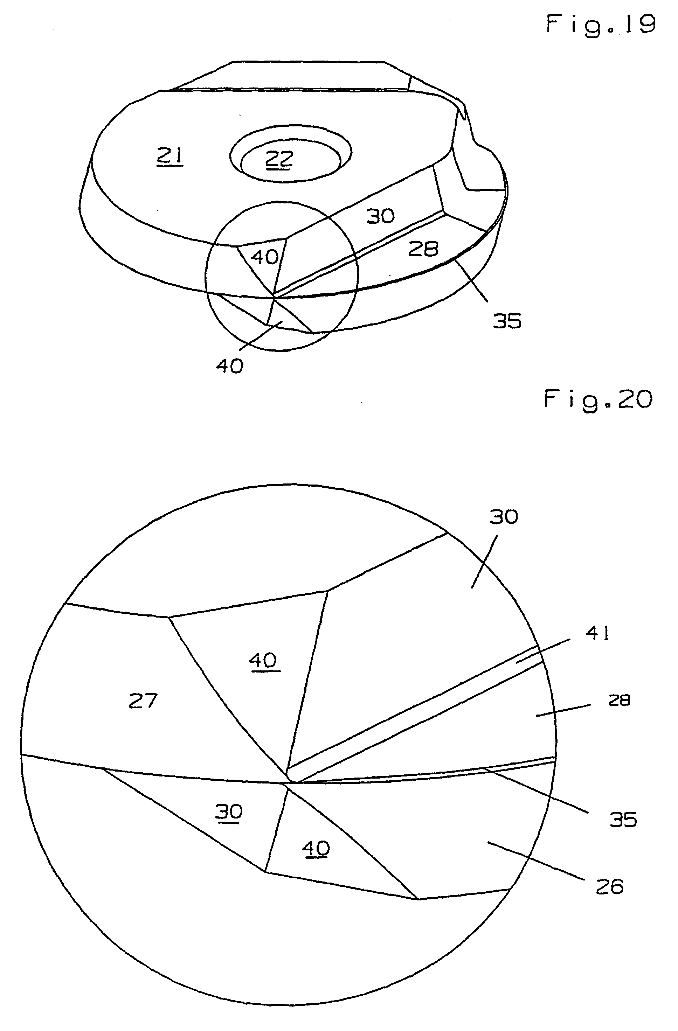

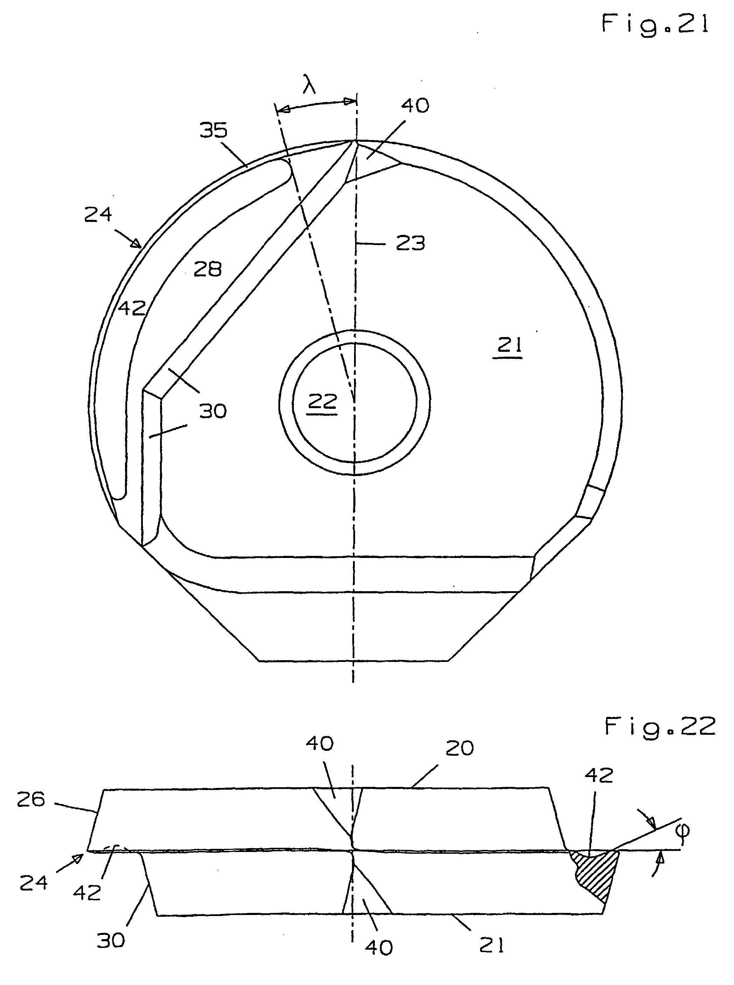

Fig. 16, 17, 18 zeigen eine Ausführungsform, bei der anstelle der Ausspitzung 34 in Fig. 1-3 eine Freilegung 40 vorgesehen ist. Diese Freilegung 40 begünstigt einen ungehinderten Spanabfluß im Zentrumsbereich. Wie Fig. 6 zu entnehmen ist, endet die Freilegung 40 um ein Maß b, das etwa 0,1 mm beträgt, vor dem Zentrum, das dementsprechend stabilisiert ist. Entsprechendes gilt für die sich gegenüberliegenden Flankenabschnitte 30, die in einem Abstand c von 0,05 mm enden. Diese Maßnahme ist zur hinreichenden Stabilisierung des Zentrums, an dem die beiden Schneidkanten 24, 25 aneinandergrenzen, erforderlich, um vorzeitige Ausbrüche zu verhindern. Fig. 19 und 20 verdeutlichen eine Ausführungsform, bei der die Fase 35 dort endet, wo die Spanfläche 28, bzw. 29 an eine Ausrundung 41 angrenzt, die den Übergang zur Flanke 30 darstellt. In den in Fig. 1 bis 8 und 14 bis 20 dargestellten Ausführungsbeispielen sind die Schneiden 24, 25 in den gefasten Bereichen leicht untermittig angeordnet und steigen entsprechend der Darstellung in Fig. 6 jeweils von der Peripherie zum Zentrum 36 hin an. Die Schneideinsätze nach Fig. 1 bis 7 und 14 bis 20 werden für Schlichtbearbeitungen eingesetzt.

Der Freiwinkel, unter dem die Freiflächen 26, 27 angeordnet sind, ist mindestens 2°. Alternativ zu einer jeweils über ihre Breite ebenen Freifläche kann die Freifläche entsprechend Fig. 8 auch abgewinkelt sein, wobei in dem schneidkantenbenachbarten Bereich 261, 271 ein kurzer Freiflächenabschnitt eine geringe Winkelneigung 2° bis maximal 13° besitzt, während der sich anschließende Freiflächenabschnitt 262, 272 einen größeren Freiwinkel von 14° bis 30° aufweist. Die Höhe der entlang der Schneidkante gleich breiten Freiflächenabschnitte 261, 271 beträgt maximal ein Drittel der Gesamthöhe der Freifläche 26, 27 bzw. des Maßes, das sich aus den einzelnen Höhen der Freiflächen 261 und 262 bzw. 271 und 272 ergibt.

In der in Fig. 9 bis 12 dargestellten Ausführungsform fallen die Schneidkanten im zentrumsnahen Bereich jeweils zum Zentrum hin ab, wodurch sich eine jeweils schräggestellte Schneidkante 37 beidseitig des Zentrums ergibt. Durch diese Maßnahme wird eine Stabilisierung der Schneidkanten im Zentrum geschaffen, weshalb die erfindungsgemäße Fase 35 lediglich in dem außerzentrischen Winkelbereich γ angeordnet ist, der zwischen 30° und 100°, vorzugsweise zwischen 45° und 90°, liegt und bei einem Winkel η von 5° bis 35° startet, der durch die Grenze von Zentrumsschneide und Peripherieschneide definiert ist. In Fig. 10 sind weiterhin Freiflächenbereiche 263, 264 bzw. 273, 274 dargestellt, die sich gegenüber den konischen Freiflächen 26 bzw. 27 vorwölben, so daß die Schneiden 37 und 24 bzw. 25 näherungsweise auf einer gemeinsamen Hüllkugel liegen. Im Zentrum beträgt die Vorwölbung in Richtung der Rotationsachse 0,02 bis 0,25 mm bei übermittiger Schneidenanordnung. Bei untermittiger Anordnung der gefasten Schneiden, vor allem zum Schlichten, beträgt die Vorwölbung 0,001 bis 0,05 mm.

Alternativ zeigt Fig. 13 eine Ausführungsform, bei der der Bereich der gefasten Schneide 24 bei einem Winkel η von 40° bis 60° beginnt. Diese Ausführung ermöglicht eine gezielte Schneidenstabilisierung in den Schneidenbereichen, wo die maximalen effektiven Spannungsdicken und örtlichen Belastungen auftreten.

Gegenüber der in Fig. 1 bis 7 dargestellten Ausführungsform wird der Abstand c (siehe Fig. 12) vorzugsweise 0,05 bis 0,25 mm breit gewählt. Die in Fig. 9 bis 13 dargestellten Schneidplatten sind vornehmlich zum Schruppen geeignet. Im übrigen sind mit Ausnahme der hier nur peripher angeordneten Fase dieselben Gestaltungsmerkmale wählbar, die auch zu Fig. 1 bis 8 bereits beschrieben worden sind.

Der in Fig. 21 und 22 dargestellte Schneideinsatz besitzt zusätzlich eine Spanformmulde 42, die sich an die Fase 35 auf der Spanfläche 28 anschließt. Diese Spanformmulde 42 endet zum Zentrum 36 hin in einem durch den Winkel λ definierten Abstand, der zwischen 3° und 35° liegt. Die Spanformmulde besitzt einen Spanwinkel ϕ zwischen 5° und 30°.

Der besondere Vorteil der vorliegenden Erfindung besteht darin, daß ein schneidkantenstabiler, zäher Schneideinsatz insbesondere zum Kopierfräsen geschaffen worden ist, der optimale Rundlaufeigenschaften besitzt.

## Patentansprüche

1. Schneideinsatz für einen Kugelkopffräser, insbesondere zum Formenfräsen, mit zwei einander gegenüberliegenden Anlageflächen (20, 21), zwei unter einem Freiwinkel geneigten und sich jeweils über einen Winkel von mindestens 90° erstreckenden bogenförmigen Freiflächen (26, 27), zwei drehsymmetrisch angeordneten teilkreisförmigen und im wesentlichen diametral gegenüberliegenden Schneidkanten (24, 25) und einer Bohrung (22) zur Aufnahme einer Spannschraube, **gekennzeichnet durch** eine sich zumindest über einen Teilbereich der Schneidkante (24, 25) erstreckenden Fase (35), die gegenüber den Anlageflächen geneigt ist.

2. Schneideinsatz nach Anspruch 1, **dadurch gekennzeichnet, daß** die Fase (35) in bezug auf die ebene Anlagefläche (20, 21) unter einem Winkel (δ) zwischen 8° und 30°, weiterhin vorzugsweise zwischen einem Winkel von 10° und 20°, oder unter einem Winkel zwischen 30° und 60°, vorzugsweise 45°, negativ geneigt ist.

3. Schneideinsatz nach Anspruch 1 oder 2, **dadurch gekennzeichnet, daß** die unter einem Fasenwinkel < 30° angeordnete Fase (35) sich nur über einen Teilbereich der Schneide (24, 25) erstreckt und/oder an den Enden kontinuierlich zu 0 mm ausläuft und eine maximale Breite (a) von 0,05 mm bis 0,2 mm, vorzugsweise von 0,08 mm bis 0,15 mm, besitzt oder die unter einem Fasenwinkel zwischen 30° und 60° angeordnete Fase eine Breite zwischen 0,01 mm und 0,08 mm, vorzugsweise 0,02 mm bis 0,05 mm, aufweist, wobei die Fase (35) vorzugsweise zum axialen Zentrum (36) kontinuierlich auf 0 mm ausläuft.

4. Schneideinsatz nach Anspruch 3, **dadurch gekennzeichnet, daß** die Fase (35) ausgehend von dem axialen Zentrum (36) sich kontinuierlich zu einer maximalen Breite (a) vergrößert und zu weiteren achsferneren Bereichen in ihrer Breite wieder zu 0 mm minimiert, wobei sich die Fase vorzugsweise über einen Winkelbereich (α) der Schneide von 3° bis 100° erstreckt, wobei sich die Fase, ausgehend vom Zentrum (36) alternativ entweder über einen Winkelbereich der Schneide von 3° bis 8°, über einen Winkelbereich der Schneide von 8° bis 20°, über einen Winkelbereich der Schneide von 20° bis 45° oder über einen Winkelbereich der Schneide von 45° bis 100° erstreckt.

5. Schneideinsatz nach einem der Ansprüche 1 bis 4, **dadurch gekennzeichnet, daß** die Schneidkanten (24, 25) untermittig angeordnet sind und jeweils von der Peripherie zum Zentrum hin ansteigen und der Abstand der untermittigen Ebenen der Schneiden (24, 25) 0,015 mm bis 0,5 mm, vorzugsweise 0,02 mm bis 0,2 mm, beträgt.

6. Schneideinsatz nach einem der Ansprüche 1 bis 4, **dadurch gekennzeichnet, daß** die Schneidkanten (24, 25) jeweils von der Peripherie zum Zentrum hin in einem Bereich (d) abfallen, der mindestens 0,4 mm, vorzugsweise mindestens 0,6 mm, beträgt, daß der Abstand der Schneidenebenen (e) um mindestens 0,3 mm, vorzugsweise nur mindestens 0,6 mm kleiner ist als die Gesamthöhe des Schneideinsatzes und daß außerhalb dieses Zentrumsbereiches eine Fase angeordnet ist, vorzugsweise über einen Winkelbereich (γ) der Schneide zwischen 30° und 100°, weiterhin vorzugsweise zwischen 45° und 100°.

7. Schneideinsatz nach einem der Ansprüche 1 bis 6, **gekennzeichnet durch** prismatische Anlageflächen (31, 32) im hinteren Bereich und/oder **dadurch**, daß der Freiwinkel zwischen 2° und 30°, vorzugsweise 10° und 20°, liegt, wobei die Freifläche (261, 262; 271, 272) vorzugsweise konvex ausgebildet oder abgewinkelt ist und die an die jeweilige Schneidkante angrenzende Freifläche (261, 271) einen Freiwinkel zwischen 2° und 13° und die an die Anlagefläche angrenzende Freifläche (262, 272) unter einem größeren Freiwinkel geneigt ist, der vorzugsweise zwischen 14° und 30° liegt.

8. Schneideinsatz nach Anspruch 7, **dadurch gekennzeichnet, daß** die Breite der an die Schneidkante angrenzenden Freifläche (261, 271) zwischen 5 % und 30 %, vorzugsweise zwischen 7 % und 15 % der Gesamthöhe des Schneideinsatzes liegt und/oder daß im Anschluß an die Schneidkante eine Spanformmulde ausgebildet ist.

9. Kugelkopffräser mit einem Werkzeughalter, der eine Ausnehmung zur Aufnahme eines Schneideinsatzes aufweist, der mit einer Spannschraube fixiert wird, wobei der Schneideinsatz gemäß Anspruch 1 ausgebildet ist.

10. Kugelkopffräser nach Anspruch 9, **dadurch gekennzeichnet, daß** der Schneideinsatz nach einem der Ansprüche 2 bis 15 ausgebildet ist, vorzugsweise dergestalt, daß die Ausnehmung des Werkzeughalters prismatische Anlageflächen besitzt, die mit dem prismatischen Anlageflächen (31, 32)des Schneideinsatzes im hinteren Bereich eine formschlüssige Anlage im Spannzustand bilden.

## Claims

1. Cutting insert for a spherical milling cutter, in particular for making dies, with two opposite planar support faces (20, 21), two arcuate clearance faces (26, 27) inclined at a clearance angle and each extending through an angle of at least 90°, two rotation-symmetrical partly circular and generally diametrically opposite cutting edges (24, 25), and a hole (22) for a mounting screw,
**characterised**
**by** a respective bevel (35) that extends over at least a portion of each cutting edge (24, 25) and that is inclined relative to the support surface.

2. Cutting insert according to claim 1, **characterised in that** the bevel (35) forms with the respective planar support face (20, 21) an angle (δ) between 8° and 30°, further preferably between an angle of 10° and 20°, or is negatively inclined at an angle between 30° and 60°, preferably 45°.

3. Cutting insert according to claim 1 or 2, **characterised in that** the bevels (35) are set at a face angle of < 30°, each extend over only a portion of the respective cutting edge (24, 25), and/or taper continuously to their ends to 0 mm and have a maximal width (a) of 0,05 mm to 0,2 mm, preferably from 0,08 mm to 0,15 mm or a bevel extending at a face angle between 30° and 60° has a width between 0,01 mm and 0,08 mm, preferably 0,02 mm to 0,05 mm, whereby the bevel (35) preferably each extends continuously down to 0 mm at an axial centre (36).

4. The cutting insert according to claim 3, **characterised in that** the bevel (35) widens starting at the axial centre (36) continuously to a maximum width (a) and in further regions remote from the axis their widths decrease again to 0 mm, the bevel extending along the respective cutting edges over an angle (α) from 3° to 100°, whereby the bevel extends along the respective cutting edges from a centre (36) either over an angle of 3° to 8°, or over an angle of 8° to 20°, or over an angle of 20° to 45°, or over an angle of 45° to 100°.

5. Cutting insert according to one of claims 1 to 4, **characterised in that** the cutting edges (24, 25) are arranged below the centre and each rise from outer ends to a centre and the spacing of the below-centre planes of the cutting edges (24, 25) is 0,015 mm to 0,5 mm, preferably 0,02 mm to 0,2 mm.

6. Cutting insert according to one of claims 1 to 4, **characterised in that** the cutting edges (24, 25) each drop from a centre to the ends in a region (d) of at least 0,4 mm, preferably at least 0,6 mm, that the spacing of the cutting planes (e) is at least 0,3 mm, preferably only at least 0,6 mm, smaller than the overall height of the cutting insert, and that outside this centre region a bevel is provided, preferably over an angle (γ) of the cutting edge between 30° and 100°, further preferably between 45° and 100°.

7. Cutting insert according to one of claims 1 to 6, **characterised by** prismatic support faces (31, 32) in a rear region and/or **characterised in that** a clearance angle lies between 2° and 30°, preferably 10° and 20°, whereby the clearance faces (261, 262; 271, 72) are preferably angled or convex and the clearance faces (261 and 271) adjacent the cutting edge are inclined at a clearance angel between 2° and 13° and the clearance faces (262, 272) bordering the support surfaces are inclined at a larger clearance angel that preferably lies between 14° and 30°.

8. Cutting insert according to claim 7, **characterised in that** the width of the clearance faces (261,271) bordering the cutting edge lies between 5 % and 30 %, preferably between 7 % and 15 % of the overall height of the cutting insert and/or that a chip-shaping groove is formed adjacent the cutting edge.

9. Spherical milling cutter with a tool holder that has a seat for holding a cutting insert that is held in place by a retaining screw, the cutting insert being shaped according to claim 1.

10. Spherical milling cutter according to claim 9, **characterised in that** the cutting insert is shaped according to one of claims 2 through 8, preferably such that the seat of the tool holder has prismatic support faces that meet in surface contact with the prismatic support faces (31, 32) of the cutting insert in a rear region.

## Revendications

1. Insert de coupe pour une fraise à tête sphérique, en particulier pour le fraisage de moules, avec deux surfaces d'appui (20, 21) placées en vis-à-vis, deux faces de dépouille en arc (26, 27) inclinées sous un angle de dépouille et s'étendant respectivement sur un angle d'au moins 90°, deux tranchants (24, 25) en forme de cercle partiel disposés à symétrie de rotation et pour l'essentiel diamétralement opposés, et avec un trou (22) destiné à recevoir une vis de serrage, **caractérisé par** un chanfrein (35) qui s'étend au moins sur une zone partielle du tranchant (24, 25) et qui est incliné par rapport aux surfaces d'appui.

2. Insert de coupe selon la revendication 1, **caractérisé par le fait que** le chanfrein (35) est incliné de manière négative par rapport à la surface plane d'appui (20, 21), à savoir sous un angle (δ) compris entre 8° et 30°, en outre de préférence sous un angle compris entre 10° et 20°, ou sous un angle compris entre 30° et 60°, de préférence de 45°.

3. Insert de coupe selon la revendication 1 ou 2, **caractérisé par le fait que** le chanfrein (35) disposé sous un angle de chanfrein < 30° ne s'étend que sur une zone partielle du tranchant (24, 25) et/ou se termine, aux extrémités, continûment en 0 mm et présente une largeur maximale (a) comprise entre 0,05 mm et 0,2 mm, de préférence entre 0,08 mm et 0,15 mm, ou que le chanfrein disposé sous un angle de chanfrein compris entre 30° et 60° présente une largeur comprise entre 0,01 mm et 0,08 mm, de préférence entre 0,02 mm et 0,05 mm, de préférence le chanfrein (35) se terminant continûment en 0 mm vers le centre axial (36).

4. Insert de coupe selon la revendication 3, **caractérisé par le fait que**, à partir du centre axial (36), le chanfrein (35) s'agrandit continûment de manière à passer à une largeur maximale (a) et que, vers d'autres zones situées plus loin de l'axe, sa largeur diminue de nouveau de manière à passer à 0 mm, le chanfrein s'étendant de préférence sur une zone angulaire (α) du tranchant de 3° à 100°, le chanfrein - à partir du centre (36) - s'étendant alternativement ou sur une zone angulaire du tranchant de 3° à 8°, sur une zone angulaire du tranchant de 8° à 20°; sur une zone angulaire du tranchant de 20° à 45° ou sur une zone angulaire du tranchant de 45° à 100°.

5. Insert de coupe selon l'une des revendications 1 à 4, **caractérisé par le fait que** les tranchants (24, 25) sont disposés au-dessous du centre et augmentent respectivement de la périphérie au centre et que la distance des plans sous-centraux des tranchants (24, 25) est comprise entre 0,015 mm et 0,5 mm, de préférence entre 0,02 mm et 0,2 mm.

6. Insert de coupe selon l'une des revendications 1 à 4, **caractérisé par le fait que** les tranchants (24, 25) descendent respectivement de la périphérie au centre dans une zone (d) qui est de 0,4 mm au moins, de préférence de 0,6 mm au moins, que la distance des plans (e) des tranchants est d'au moins 0,3 mm, de préférence seulement au moins 0,6 mm plus petite que la hauteur totale de l'insert de coupe, et qu'un chanfrein est disposé à l'extérieur de cette zone du centre, de préférence sur une zone angulaire (γ) du tranchant entre 30° et 100°, en outre de préférence entre 45° et 100°.

7. Insert de coupe selon l'une des revendications 1 à 6, **caractérisé par** des surfaces prismatiques d'appui (31, 32) dans la zone arrière et/ou par le fait que l'angle de dépouille est compris entre 2° et 30°, de préférence entre 10° et 20°, la face de dépouille (261, 262 ; 271, 272) étant réalisée de préférence de manière convexe ou étant coudée et la face de dépouille (261, 271) contiguë au tranchant respectif présentant un angle de dépouille compris entre 2° et 13° et la face de dépouille (262, 272) contiguë à la surface d'appui étant inclinée sous un angle de dépouille plus grand qui, de préférence, est compris entre 14° et 30°.

8. Insert de coupe selon la revendication 7, **caractérisé par le fait que** la largeur de la face de dépouille (261, 271) qui est contiguë-au tranchant est comprise entre 5% et 30%, de préférence entre 7% et 15% de la hauteur totale de l'insert de coupe, et/ou qu'un creux à former le copeau est réalisé suite au tranchant.

9. Fraise à tête sphérique avec un porte-outil qui présente un évidement destiné à recevoir un insert de coupe qui est fixé au moyen d'une vis de serrage, l'insert de coupe étant réalisé selon la revendication 1.

10. Fraise à tête sphérique selon la revendication 9, **caractérisé par le fait que** l'insert de coupe est réalisé selon l'une des revendications 2 à 8, de préférence de telle manière que l'évidement du porte-outil présente des surfaces prismatiques d'appui qui forment avec les surfaces prismatiques d'appui (31, 32) de l'insert de coupe dans la zone arrière un appui à engagement positif en état serré.
